# EUROPÄISCHE PATENTSCHRIFT

(11) **EP 2 783 835 B1**
(45) Veröffentlichungstag und Bekanntmachung des Hinweises auf die Patenterteilung: **11.09.2019**
(21) Anmeldenummer: 14157846.8
(22) Anmeldetag: 05.03.2014
(51) Int. Cl.: B29C 63/34, F16L 9/12

(54) **VERFAHREN ZUR HERSTELLUNG EINES MIT EINEM INLINER AUSGEKLEIDETEN ROHRES**
METHOD FOR MANUFACTURING A TUBE CLAD WITH AN INNER LINER
PROCÉDÉ DE FABRICATION D'UN TUBE REVÊTU D'UN HABILLAGE INTÉRIEUR

(30) Priorität: 28.03.2013 DE 102013205614
(43) Veröffentlichungstag der Anmeldung: 01.10.2014
(73) Patentinhaber: Evonik Degussa GmbH, 45128 Essen (DE)
(72) Erfinder: Franosch, Juergen, 45770 Marl (DE); Berger, Jan, 44141 Dortmund (DE); Dowe, Andreas, 46325 Borken (DE); Gensheimer, Marco, 47051 Duisburg (DE); Kannengießer, Uwe, 46509 Xanten (DE)
(74) Vertreter: Evonik Patent Association

(56) Entgegenhaltungen:
- WO-A1-97/25567
- WO-A2-02/25156

## Beschreibung

Die Erfindung betrifft ein Verfahren zur Herstellung eines Rohres, dessen innere Oberfläche mit einer thermoplastischen Schicht ausgekleidet ist. Bei einer so hergestellten Rohrleitung handelt es sich insbesondere um eine Leitung aus Metall, die zum Transport von Abwasser, Gas, Öl, Rohöl, Raffinerieprodukten, Wasser-ÖI-Gemischen, Sand-Wasser-ÖI-Gemischen, Aufschlämmungen im Bergbau oder ähnlichen Medien, zur Stützung und Auskleidung einer Öl- oder Gasförderbohrung oder als Bohrgestänge bei der Bohrlocherstellung in Öl- oder Gasfeldern dient.

Abwasser-, Öl- oder Gasleitungen oder Leitungen, die ähnliche Medien transportieren, haben eine begrenzte Standzeit. Der Grund hierfür sind einerseits fortschreitende Korrosionsschäden, andererseits andauernde mechanische Belastungen, wie sie durch den Transport von abrasiven Medien auftreten. Die in Frage kommenden Leitungen liegen in der Regel rund 1 m tief oder mehr im Erdreich oder unter dem Wasser in Meeren und Seen, so dass ein Auswechseln der Leitungen nur mit erheblichem Aufwand möglich wäre. Metallische Leitungen werden häufig auch zur Stabilisierung und Auskleidung von Bohrlöchern in Öl- und Gasfeldern eingesetzt. Diese, in der Fachwelt Casings genannten, Leitungen sind ebenfalls sehr korrosiven, mitunter auch abrasiven Bedingungen ausgesetzt. Des Weiteren werden metallische Rohrleitungen häufig auch als Bohrgestänge bei der Erstellung von Bohrlöchern im Erdreich verwendet. Diese Bohrungen dienen der Erschließung von Ölquellen, Gasquellen oder auch Wasserquellen. Das Bohrgestänge führt den Bohrkopf während der Bohrung in das Erdreich. Das Gestänge ist dabei häufig ein Rohr, durch dessen Querschnitt Prozessmedien, aber auch erste Fördermedien fließen können. Auch diese Leitungen sind hoch korrosiven und mitunter abrasiven Medien ausgesetzt. Es besteht daher ein Bedarf an korrosions- und abrasionsbeständigen Leitungen.

Die in Frage kommenden Leitungen werden häufig ab Werk oder zum Beispiel auf sogenannten Spool Bases mit einem Liner ausgestattet. Dieser dient unter anderem der Vorbeugung gegen Korrosionsschäden. Ölförderleitungen werden zum Beispiel vor der Einbringung in das Meer auf sogenannten Spool Bases auf dem Festland zusammengefügt und mit einem Liner ausgestattet. Des Weiteren werden beispielsweise Leitungen für Casings von Bohrlöchern schon ab Werk mit einem Liner versehen und anschließend in das Bohrloch eingebracht.

In der DE 27 04 438 A1 wird vorgeschlagen, dass in das Innere von Abflussrohren eine flexible Polyethylen-Rohrleitung eingeführt wird, deren Außendurchmesser kleiner als der Innendurchmesser des Abflussrohres ist, wobei die flexible Rohrleitung mit Abstand zum Abflussrohr unter Bildung eines Ringraumes angeordnet wird. Bei diesem Verfahren wird der Ringraum mit einer aushärtbaren Vergussmasse niedriger Viskosität ausgefüllt, wobei als Verfüllmasse beispielsweise Magnesiumzement verwendet wird. Eine ähnliche Vorgehensweise wird in der WO 2008/019946 beschrieben.

Aus der WO 93/21398 und der WO 93/21399 sind Liningsysteme mit jeweils zwei aus Polyethylen bestehenden Inlinern bekannt. Der innere Inliner ist mit Noppen versehen, die als Abstandshalter dienen.

Darüber hinaus lehrt die WO 96/06298, einen mit Distanzelementen versehenen Inliner aus Polyethylen oder Polypropylen in Leitungen bzw. Rohre einzuführen und den Zwischenraum dann mit einer aushärtbaren Masse bzw. einem aushärtenden Kunststoffmaterial zu verfüllen. Zur Verbesserung der Haftung dieses Kunststoffmaterials auf dem Inliner wird eine Grundierung empfohlen.

Geeignete Verfahren zum Einbringen eines Inliners mit Übermaß in ein Rohr oder eine Rohrleitung sind beispielsweise in folgenden Patentanmeldungen beschrieben: EP 0 562 706 A2, EP 0 619 451 A1, WO 95/27168, WO 98/02293, WO 01/16520, WO 2007/023253, EP 0 377 486 A2, EP 0 450 975 A2, EP 0 514 142 A2 und WO 96/37725.

Der Außendurchmesser des Rohrinliners wird dabei etwas größer als der des auszukleidenden Rohres ausgelegt. Um den Inliner einzubringen, wird dieser dann in seinem Querschnitt durch Verstrecken, Stauchen oder Falten reduziert. Nach dem Einbringen des Inliners legt sich dieser durch Rückstellung an die Rohrinnenwandung an. Dieser Vorgang kann durch Druck- und Temperaturbeaufschlagung unterstützt werden. Das so ausgekleidete Rohr weist keinen Ringraum auf. Bedingt durch Unregelmäßigkeiten der inneren Rohr- oder Leitungsoberfläche, die beispielsweise durch Oberflächenrauhigkeit, aber auch durch Schweißnähte gegeben sein können, verbleiben allerdings Mikrovolumina.

Ein geeignetes Einbringungsverfahren ist beispielsweise das Swagelining™. Nachdem hier Inlinerrohre zu einer Sektion stumpfverschweißt wurden, die etwas länger ist als der zu sanierende Abschnitt des Trägerrohrs, wird diese durch ein Gesenk gezogen, das den Rohrdurchmesser temporär reduziert. Damit wird das Einziehen des Inliners in den kleineren Rohrinnenraum des Trägerrohrs ermöglicht. Nach dem vollständigen Einziehen des Inliners in die Leitung wird die Zugkraft entlastet. Aufgrund des Rückstellverhaltens des thermoplastischen Werkstoffs strebt der Inliner wieder zu seinem Ausgangsdurchmesser zurück, bis er fest an de Innenwand der Leitung anliegt. Daraus resultiert eine hohe Wandreibung zwischen Inliner und Leitung, die zu einer Lagestabilisierung des Inliners führt und beispielsweise eine durch Medienquellung oder Wärmeeinfluss induzierte Längsausdehnung über die Ausdehnung der Leitung hinaus verhindert. Zudem liegt der Inliner so dicht an der Rohrinnenfläche an, dass daraus ein sehr geringes Volumen im Ringraum resultiert.

Ein weiteres geeignetes Einbringungsverfahren ist das Rolldown®-Verfahren. Auch hier werden zunächst Inlinerrohre vor Ort im Stumpfschweißverfahren verbunden. Um einen Einzug zu ermöglichen, wird der Querschnitt des Inliners in der Rolldown-Maschine mit Hilfe paarweise angeordneter Rollen verringert. Die Geschwindigkeit der Verformung beträgt typischerweise ein bis drei Meter pro Minute. Nach dem Einzug werden die Rohrenden verschlossen und der Inliner wird mit Wasserdruck beaufschlagt. Dadurch dehnt er sich wieder auf seinen ursprünglichen Durchmesser aus und legt sich dicht an die Rohrinnenwand an. Gegenüber dem Swagelining sind hier beim Einziehen des Inliners geringere Zugkräfte erforderlich, was zu einer geringeren Materialbelastung führt und höhere Einzugsgeschwindigkeiten ermöglicht.

Der Inliner kann nach diesen Methoden auch bereits werksseitig eingebracht werden.

Das Falten ist beispielsweise in der EP 0 377 486 A2 beschrieben.

Die WO 2011/042732 beschreibt ein weiteres Verfahren zum Einbringen von Inlinern mit größerem oder gleichem Durchmesser als die Trägerleitung. Dort wird erläutert, wie ein Inliner in kurze Rohrabschnitte eingebracht werden kann. Dabei wird der Inliner durch ein Gesenk in das Trägerrohr geschoben.

Ein weiteres Verfahren zum Einbringen von Inlinern ist in der WO9725567 beschrieben.

Die oben beschriebenen Einbringverfahren sind geeignet, um Leitungen, die zum Transport von Fernwärme, Frischwasser, Abwasser, Gas, Öl, Rohöl oder ähnlichen Medien, zur Stützung und Auskleidung von Öl- und Gasförderbohrungen oder als Bohrgestänge bei der Bohrlocherstellung in Öl- und Gasfeldern dienen, mit Linern aus thermoplastischen Werkstoffen auszukleiden.

Nachteilig bei allen beschriebenen Verfahren ist, dass gasförmige Medien durch den Inliner permeieren können. Die zwischen dem Inliner und der Trägerleitung befindlichen Hohlräume und/oder Mikrohohlräume werden dadurch mit Gas gefüllt. Der Gasdruck nimmt im Gleichgewicht den Partialdruck des Gases im Fördermedium an. Bei Druckschwankungen in der Leitung kann sich das im Ringraum befindliche Gas ausdehnen; im schlimmsten Fall kann das Gas dabei ein Volumen einnehmen, das zum radialen Zusammenfalten des Liners führen kann. Dieses Zusammenfalten führt zu einem Verschließen des Trägerrohrquerschnitts und im schlimmsten Fall dazu, dass kein Medium mehr durchgeleitet werden kann. Dieses, dem Fachmann als Kollabieren bekannte Versagen, ist das dominierende Versagensmuster von Inlinern. Besonders kritisch ist dieses Phänomen bei der Förderung bzw. dem Transport von Rohöl oder Erdgas oder beim Transport von überkritischem CO₂, vor allem unter Bedingungen, bei denen mit relativ schnellen Druckänderungen gerechnet werden muss. Derartige Druckänderungen sind in der Öl- und Gasindustrie unter dem Begriff "Rapid Gas Decompression" (RGD) ein bekanntes Phänomen.

So muss beispielsweise bei der tertiären Erdölförderung mit solchen Druckänderungen umgegangen werden. Tertiäre Ölfördermethoden verwenden überkritisches CO₂ als Lösemittel für Restöl, wobei dessen Viskosität verringert und die Extraktion aus den ölführenden Schichten erleichtert wird. Für CO₂ liegt die kritische Temperatur bei 31 °C und der kritische Druck bei 73,8 bar. In der Praxis werden deutlich höhere Drücke verwendet, da die Lösefähigkeit von überkritischem CO₂ mit dem Druck ansteigt. Typische Drücke liegen im Bereich von 75 bis 220 bar, wobei die Temperatur bis zu 150 °C betragen kann.

Die Rohre, die überkritisches CO₂ transportieren, sind häufig mit einem polymeren Inliner ausgerüstet, um die üblicherweise metallische Struktur vor Korrosion zu schützen. Bei Transportrohren besteht der Liner üblicherweise aus Polyethylen; er kann aber auch beispielsweise aus einem Polyamid oder aus PVDF bestehen. Darüber hinaus können schnelle Druckänderungen während des Betriebs von Rohölleitungen sowie von Gasleitungen auftreten, beispielsweise dann, wenn die Leitung zwecks Wartungsarbeiten entspannt wird und dabei eine rasche Druckminderung auftritt. Auch bei einer Notfallabschaltung kann in solchen Förder-, Sammel- oder Transportleitungen eine rasche Druckminderung auftreten.

Die Aufgabe der Erfindung besteht darin, die geschilderten Nachteile zu vermeiden und ein Verfahren zur Verfügung zu stellen, welches einerseits die guten Eigenschaften der üblicherweise verwendeten Linertechnologien besitzt und das andererseits Hohlräume und Mikrohohlräume eliminiert, so dass die oben beschriebene Schwierigkeit nicht mehr auftritt.

Diese Aufgabe wurde gelöst durch ein Verfahren nach Anspruch 1.

Die radiale Dehnung des Inliners im Schritt e) wird durch Temperatureinwirkung von außen während des Erhitzens des Trägerrohrs sowie gegebenenfalls unterstützendes Erhitzen des Inliners von innen und/oder Anlegen eines Innendrucks bewirkt.

Generell sind hierbei zwei Ausführungsformen möglich.

In der ersten Ausführungsform ist der Außendurchmesser des Inliners geringfügig größer als der Innendurchmesser des Rohrs. Die Differenz der beiden Durchmesser ist zumindest ein infinitesimal kleiner Betrag. Typischerweise ist der Außendurchmesser des Inliners maximal 25 % und bevorzugt 20 % größer als der Innendurchmesser des Rohrs. Hier wird im Verfahrensschritt c) der Querschnitt des Inliners in der Regel um 3 bis 30 % und bevorzugt um 5 bis 25 % reduziert. Dies kann beispielsweise durch Verstrecken, Stauchen oder Falten gemäß dem Stand der Technik geschehen.

In der zweiten Ausführungsform entspricht der Außendurchmesser des Inliners dem Innendurchmesser des Rohrs oder er ist geringfügig kleiner, beispielsweise bis maximal 3 %, so dass der Inliner mit geringen Kräften in das Rohr eingebracht werden kann ("close fit design"). Falls erforderlich, kann auch hier vor dem Einbringen des Inliners dessen Querschnitt durch Einwirken einer äußeren Kraft verringert werden; diese kann aber deutlich geringer sein als bei der ersten Ausführungsform. Die jeweiligen Rohrgeometrien werden so gewählt, dass sich der polymere Inliner während der Temperatureinwirkung radial thermisch stärker ausdehnt als das Rohr, hierbei in engen Kontakt kommt und der notwendige Anpressdruck erzeugt wird. Letzteres kann durch Anlegen eines Innendrucks, beispielsweise mittels Druckluft, verstärkt werden; auf diese Weise kann auch die geometrische Fixierung beim Verfahrensschritt f) erfolgen. Der polymere Inliner kann aber auch direkt nach dem Extrusionsprozess mit einem Memoryeffekt ausgerüstet werden, der nach der Temperatureinwirkung und dem nachfolgenden Abkühlen zu einem vergrößerten Außendurchmesser führt. Dazu wird der polymere Inliner in einem nachfolgenden Prozessschritt durch eine Düse gezogen und dadurch kalt verformt (in Längsrichtung gestreckt und im Durchmesser reduziert). Diese Verformung wird bei Temperaturen unterhalb T_{g} durchgeführt, sodass bei Erwärmung des Inliners über T_{g} sich die Verstreckung zurückstellt. Dieses Verfahren eignet sich besonders für polymere Werkstoffe, die einen hohen T_{g} besitzen, beispielsweise für Polyarylenetherketone, um eine gute Lagerstabilität dieser so vorbehandelten polymeren Liner zu gewährleisten.

Unter "Rohr" wird hierbei im engeren Sinne ein transportierbarer Abschnitt verstanden; mehrere solcher Rohre werden zu einer Rohrleitung zusammengefügt. Dieses Verfahren ist besonders für Rohrlängen zwischen 1m und 50m geeignet, die anschließend bei der Installation zu längeren Rohrleitungen verbunden werden, beispielsweise mittels Verschraubung, Flanschen, Quetschmuffen, Schweißen etc.

Das Rohr besteht vorzugsweise aus Metall, beispielsweise aus Stahl, Edelstahl, Kupfer, Aluminium, Gusseisen, verzinktem Stahl, cadmiertem Stahl, aluminumbeschichtetem Metall, mit Metalllegierungen wie z. B. GALFAN beschichtetem Stahl oder aus jedem anderen Metall. Besonders bevorzugt besteht die innere Oberfläche des Rohrs aus Stahl, Zink oder einer Legierung mit dem Hauptbestandteil Aluminium, Eisen oder Zink.

Geeignete Materialien für den Inliner sind thermoplastische Formmassen, beispielsweise auf Basis von Polyamiden, Polyolefinen, Fluorpolymeren, Polyarylenetherketonen oder Polyphenylensulfid.

Das erfindungsgemäß verwendbare Polyamid ist herstellbar aus einer Kombination von Diamin und Dicarbonsäure, aus einer ω-Aminocarbonsäure oder dem entsprechenden Lactam. Grundsätzlich kann jedes Polyamid verwendet werden, beispielsweise PA46, PA6, PA66 oder Copolyamide auf dieser Basis mit Einheiten, die sich von Terephthalsäure und/oder Isophthalsäure herleiten. In einer bevorzugten Ausführungsform enthalten die Monomereinheiten im Mittel mindestens 8, mindestens 9 bzw. mindestens 10 C-Atome. Bei Gemischen von Lactamen wird hier das arithmetische Mittel betrachtet. Bei einer Kombination von Diamin und Dicarbonsäure muss das arithmetische Mittel der C-Atome von Diamin und Dicarbonsäure in dieser bevorzugten Ausführungsform mindestens 8, mindestens 9 bzw. mindestens 10 betragen. Geeignete Polyamide sind beispielsweise: PA610 (herstellbar aus Hexamethylendiamin [6 C-Atome] und Sebacinsäure [10 C-Atome], das Mittel der C-Atome in den Monomereinheiten beträgt hier somit 8), PA88 (herstellbar aus Octamethylendiamin und 1.8-Octandisäure), PA8 (herstellbar aus Capryllactam), PA612, PA810, PA108, PA9, PA613, PA614, PA812, PA128, PA1010, PA10, PA814, PA148, PA1012, PA11, PA1014, PA1212 und PA12. Darüber hinaus sind teilaromatische Polyamide gut geeignet, beispielsweise PA66/6T, PA6/6T, PA6T/MPMDT (MPMD steht für 2-Methylpentamethylendiamin), PA9T, PA10T, PA11T, PA12T, PA14T sowie Copolykondensate dieser letzten Typen mit einem aliphatischen Diamin und einer aliphatischen Dicarbonsäure oder mit einer ω-Aminocarbonsäure bzw. einem Lactam. Die Herstellung der Polyamide ist Stand der Technik. Selbstverständlich können auch hierauf basierende Copolyamide eingesetzt werden, wobei gegebenenfalls auch Monomere wie Caprolactam mit verwendet werden können.

Das Polyamid kann auch ein Polyetheresteramid oder ein Polyetheramid sein. Polyetheramide sind prinzipiell z. B. aus der DE-OS 30 06 961 bekannt. Sie enthalten als Comonomer ein Polyetherdiamin. Geeignete Polyetherdiamine sind durch Konversion der entsprechenden Polyetherdiole durch reduktive Aminierung oder Kupplung an Acrylnitril mit nachfolgender Hydrierung zugänglich (z. B. EP-A-0 434 244; EP-A-0 296 852). Sie besitzen in der Regel eine zahlenmittlere Molmasse von 230 bis 4000; ihr Anteil am Polyetheramid beträgt bevorzugt 5 bis 50 Gew.-%.

Kommerziell verfügbare Polyetherdiamine ausgehend von Propylenglykol sind als ELASTAMIN®-Typen bei der Fa. Huntsman kommerziell erhältlich. Grundsätzlich sind auch Polyetherdiamine ausgehend vom 1.4-Butandiol oder 1.3-Butandiol, oder gemischt aufgebaute Polyetherdiamine, etwa mit statistischer oder mit blockweiser Verteilung der von den Diolen herrührenden Einheiten, gut geeignet.

Ebenso können auch Mischungen verschiedener Polyamide, ausreichende Verträglichkeit vorausgesetzt, verwendet werden. Verträgliche Polyamidkombinationen sind dem Fachmann bekannt oder können durch Routineversuche ermittelt werden.

In einer möglichen Ausführungsform wird eine Mischung aus 30 bis 99 Gew.-%, besonders bevorzugt 40 bis 98 Gew.-% und insbesondere bevorzugt 50 bis 96 Gew.-% Polyamid im engeren Sinne sowie 1 bis 70 Gew.-%, besonders bevorzugt 2 bis 60 Gew.-% und insbesondere bevorzugt 4 bis 50 Gew.-% Polyetheresteramid und/oder Polyetheramid verwendet. Polyetheramide sind hierbei bevorzugt.

Die Polyamidformmasse kann haftungsmodifiziert sein, indem sie Zusätze enthält, die die Haftung zur Metalloberfläche verbessern. Solche Zusätze sind beispielsweise ausgewählt aus:
- Oxazolinen wie z.B. 2-Ethyl-2-oxazolin, 2-Phenyl-2-oxazolin, 2-Isopropenyl-2-oxazolin, 2-Ethyl-4-methyl-2-oxazolin, 2-Phenyl-4-ethyl-2-oxazolin, 2-Phenyl-4-methyl-2-oxazolin. Die Oxazoline können alleine oder als Mischung eingesetzt werden. Bezogen auf die Polyamidfrommasse werden 0,05 bis 10 Gew.-% und bevorzugt 0,1 bis 5 Gew.-% verwendet.
- Bisoxazolinen wie z.B. 2.2'-Methylen-bis(2-oxazolin), 2.2'-Ethylen-bis(2-oxazolin), 2.2'-Ethylen-bis(4-methyl-2-oxazolin), 2.2'-Propylen-bis(2-oxazolin), 2.2'-Tetramethylen-bis(2-oxazolin), 2.2'-Hexamethylen-bis(2-oxazolin), 2.2'-Octa-methylen-bis(2-oxazolin), 2.2'-p-Phenylen-bis(2-oxazolin), 2.2'-m-Phenylen-bis(2-oxazolin), 2.2'-o-Phenylen-bis(2-oxazolin), 2.2'-p-Phenylen-bis(4-methyl-2-oxa-zolin), 2.2'-m-Phenylen-bis(4-methyl-2-oxazolin), 2.2'-o-Phenylen-bis(4-methyl-2-oxazolin), 2.2'-p-Phenylen-bis(4-phenyl-2-oxazolin), 2.2'-m-Phenylen-bis(4-phenyl-2-oxazolin), 2.2'-o-Phenylen-bis(4-phenyl-2-oxazolin), 2.2'-Bis(2-oxazolin), 2.2'-Bis(4-methyl-2-oxazolin), 2.2'-Bis(4-ethyl-2-oxazolin), 2.2'-Bis(4-phenyl-2-oxazolin). Diese Bisoxazoline können alleine oder als Mischung eingesetzt werden. Bezogen auf die Polyamidformmasse werden 0,05 bis 10 Gew.-% und bevorzugt 0,1 bis 5 Gew.-% verwendet.
- Polyoxazolinen, die durch kationische ringöffnende Polymerisation von Oxazolinen, z.B. der oben genannten Verbindungen, hergestellt werden können. Bezogen auf die Polyamidformmasse können 0,05 bis 10 Gew.-% und bevorzugt 0,1 bis 5 Gew.-% eingesetzt werden.
- Verbindungen mit olefinischen Doppelbindungen, beispielsweise Polyalkenylenen; hier sei auf die deutsche Patentanmeldung 102012207173.3 vom 30.04.2012 verwiesen, deren Offenbarungsgehalt vollumfänglich einbezogen sein soll.
- Bifunktionellen Epoxiden wie z.B. Bisphenoldiglycidylether oder einem Epoxidharz mit einer Epoxidfunktionalität von mindestens 2. Eine Vielzahl entsprechender Verbindungen ist kommerziell erhältlich. Auch hier werden, bezogen auf die Polyamidformmasse, 0,05 bis 10 Gew.-% und bevorzugt 0,1 bis 5 Gew.-% eingesetzt.
- Haftharzen auf Basis von Acetophenon-Formaldehyd-Harzen oder Cyclohexanon-Formaldehyd-Harzen. Auch hier ist eine Vielzahl entsprechender Verbindungen kommerziell erhältlich. Die eingesetzten Mengen, bezogen auf die Polyamidformmasse, bewegen sich ebenfalls im Bereich von 0,05 bis 10 Gew.-% und bevorzugt von 0,1 bis 5 Gew.-%.
- Mono-, Oligo- und Polycarbodiimiden; geeignete Verbindungen haben die allgemeine Formel

R¹-N=C=N(̵R²-N=C=N)̵ₙR³

mit R¹ und R³ = Alkyl mit 1 bis 20 C-Atomen, Cycloalkyl mit 5 bis 20 C-Atomen, Aryl mit 6 bis 20 C-Atomen oder Aralkyl mit 7 bis 20 C-Atomen, jeweils gegebenenfalls substituiert mit einer Isocyanatgruppe, die gegebenenfalls mit einer C-H-, einer -H- oder einer O-H-reaktiven Verbindung verkappt ist; R² = Alkylen mit 2 bis 20 C-Atomen, Cycloalkylen mit 5 bis 20 C-Atomen, Arylen mit 6 bis 20 C-Atomen oder Aralkylen mit 7 bis 20 C-Atomen; n = 0 bis 100, bevorzugt 2 bis 80 und besonders bevorzugt 3 bis 70.

Das Oligo- oder Polycarbodiimid kann ein Homopolymerisat oder ein Copolymerisat sein, beispielsweise ein Copolymerisat aus 2,4-Diisocyanato-1,3,5-triisopropyl-benzol und 1,3-Diisocyanato-3,4-diisopropyl-benzol.

Geeignete Mono-, Oligo- und Polycarbodiimide sind kommerziell erhältlich. Die eingesetzten Mengen, bezogen auf die Polyamidformmasse, liegen auch hier im Bereich von 0,05 bis 10 Gew.-% und bevorzugt von 0,1 bis 5 Gew.-%.

Beim Polyolefin handelt es sich beispielsweise um Polyethylen (PE) oder um Polypropylen (PP). Grundsätzlich kann jeder handelsübliche Typ eingesetzt werden. So kommen beispielsweise in Frage: Lineares Polyethylen hoher, mittlerer oder niedriger Dichte, LDPE, Ethylen-Acrylester-Copolymere, Ethylen-VinylacetatCopolymere, isotaktisches oder ataktisches Homopolypropylen, Randomcopolymere von Propen mit Ethen und/oder Buten-1, Ethylen-Propylen-Blockcopolymere und dergleichen mehr. Das Polyolefin kann nach jedem bekannten Verfahren hergestellt werden, beispielsweise nach Ziegler-Natta, nach dem Phillips-Verfahren, mittels Metallocenen oder radikalisch.

Das Fluorpolymer kann beispielsweise ein Polyvinylidenfluorid (PVDF), ein Ethylen-Tetrafluorethylen-Copolymer (ETFE), ein mit Hilfe einer Terkomponente wie beispielsweise Propen, Hexafluorpropen, Vinylfluorid oder Vinylidenfluorid modifiziertes ETFE (beispielsweise EFEP), ein Ethylen-Chlortrifluorethylen-Copolymer (E-CTFE), ein Polychlortrifluorethylen (PCTFE), ein Tetrafluorethylen-Hexafluorpropen-Vinylidenfluorid-Copolymer (THV), ein Tetrafluorethylen-Hexafluorpropen-Copolymer (FEP) oder ein Tetrafluorethylen-Perfluoralkylvinylether-Copolymer (PFA) sein. In Frage kommen auch Copolymere auf Basis von Vinylidenfluorid, die bis zu 40 Gew.-% andere Monomere aufweisen wie beispielsweise Trifluorethylen, Chlortrifluorethylen, Ethylen, Propen und Hexafluorpropen.

Das Polyarylenetherketon enthält Einheiten der Formeln

(-Ar-X-) und (-Ar'-Y-),

wobei Ar und Ar' einen zweiwertigen aromatischen Rest darstellen, vorzugsweise 1,4-Phenylen, 4,4'-Biphenylen sowie 1,4-, 1,5- oder 2,6-Naphthylen. X ist eine elektronenziehende Gruppe, bevorzugt Carbonyl oder Sulfonyl, während Y eine andere Gruppe wie O, S, CH₂, Isopropyliden oder dergleichen darstellt. Hierbei stellen mindestens 50 %, bevorzugt mindestens 70 % und besonders bevorzugt mindestens 80 % der Gruppen X eine Carbonylgruppe dar, während mindestens 50 %, bevorzugt mindestens 70 % und besonders bevorzugt mindestens 80 % der Gruppen Y aus Sauerstoff bestehen.

In der bevorzugten Ausführungsform bestehen 100 % der Gruppen X aus Carbonylgruppen und 100 % der Gruppen Y aus Sauerstoff. In dieser Ausführungsform kann das Polyarylenetherketon beispielsweise ein Polyetheretherketon (PEEK; Formel I), ein Polyetherketon (PEK; Formel II), ein Polyetherketonketon (PEKK; Formel III) oder ein Polyetheretherketonketon (PEEKK; Formel IV) sein, jedoch sind natürlich auch andere Anordnungen der Carbonyl- und Sauerstoffgruppen möglich.

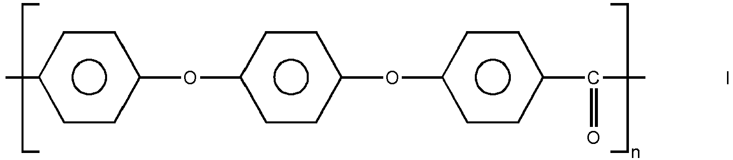

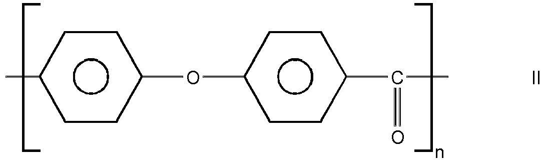

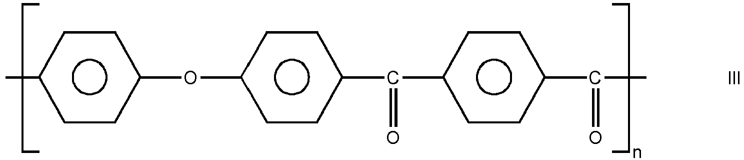

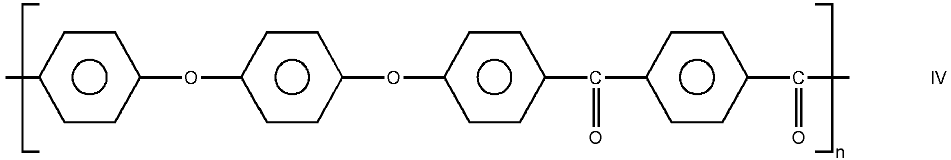

Das Polyarylenetherketon ist teilkristallin, was sich beispielsweise in der DSC-Analyse durch Auffinden eines Kristallitschmelzpunkts Tₘ äußert, der größenordnungsmäßig in den meisten Fällen um 300 °C oder darüber liegt.

Das Polyphenylensulfid enthält Einheiten der Formel

(-C₆H₄-S-);

Vorzugsweise besteht es zu mindestens 50 Gew.-%, mindestens 70 Gew.-% bzw. mindestens 90 Gew.-% aus diesen Einheiten. Die restlichen Einheiten können solche sein, wie sie oben im Falle des Polyarylenetherketons angegeben sind, oder tri- oder tetrafunktionelle Verzweigereinheiten, die aus der Mitverwendung beispielsweise von Trichlorbenzol oder Tetrachlorbenzol bei der Synthese resultieren.
Polyphenylensulfid ist in einer Vielzahl von Typen bzw. Formmassen handelsüblich.

Die Formmasse kann die üblichen Hilfs- und Zusatzstoffe sowie gegebenenfalls weitere Polymere enthalten, im Falle des Polyarylenetherketons beispielsweise Fluorpolymere wie PFA (ein Copolymer aus Tetrafluorethen und Perfluorvinylmethylether), Polyimid, Polyetherimid, LCP wie beispielsweise flüssigkristalliner Polyester, Polysulfon, Polyethersulfon, Polyphenylsulfon, Polybenzimidazol (PBI) oder weitere hochtemperaturbeständige Polymere, im Falle des Polyphenylensulfids beispielsweise Copolymere bzw. Terpolymere von Ethylen mit polaren Comonomeren und im Falle des Polyamids einen Schlagzähmodifier. Darüber hinaus können die üblichen Zusätze wie Weichmacher, Pigmente, faserförmige Verstärkungsstoffe, Verarbeitungshilfsmittel und Stabilisatoren enthalten sein. Der Anteil an Polyarylenetherketon, Polyphenylensulfid, Polyamid, Polyolefin oder Fluorpolymer an der Formmasse beträgt mindestens 50 Gew.-%, bevorzugt mindestens 60 Gew.-%, besonders bevorzugt mindestens 70 Gew.-%, insbesondere bevorzugt mindestens 80 Gew.-% und ganz besonders bevorzugt mindestens 90 Gew.-%. Vorzugsweise enthält die Formmasse keine zweite Polymerkomponente, die eine separate Phase ausbildet.

Der Inliner kann grundsätzlich einschichtig sein, er kann aber auch aus zwei, drei oder mehr Schichten bestehen. Hierbei kann die äußere Schicht des Inliners haftungsmodifiziert sein, um eine feste Verklebung mit dem Trägerrohr zu erzielen. So kann beispielsweise die Verklebung eines Inliners aus einem Polyolefin mit dem Trägerrohr dadurch optimiert werden, dass der Inliner aus einer innenliegenden Polyolefinschicht und einer darauf folgenden äußeren Schicht aus einem funktionalisierten Polyolefin besteht. Die Funktionalisierung kann auf bekannte Weise durch Aufpfropfen oder Einpolymerisieren einer ungesättigten Verbindung erfolgen, die beispielsweise eine Säureanhydridgruppe, eine Carboxylgruppe oder eine Epoxidgruppe enthält; Beispiele hierfür sind Maleinsäureanhydrid, Itaconsäureanhydrid, Acrylsäure, Methacrylsäure sowie Glycidylmethacrylat. Auch die Haftung eines aus einer Polyamidformmasse bestehenden Inliners kann durch eine derartige Außenschicht aus einem funktionalisierten Polyolefin optimiert werden. Bei mehrschichtigen Inlinern sind beispielsweise folgende Schichtenfolgen (von innen nach außen) von besonderem Interesse:
- PE/PE-MSA (mit Maleinsäureanhydrid funktionalisiertes PE);
- PP/PP-MSA;
- PA12/PE-MSA oder PP-MSA;
- PA11/PE-MSA oder PP-MSA;
- PA1010/ PE-MSA oder PP-MSA;
- PA1212/ PE-MSA oder PP-MSA;
- PA12/haftungsmodifiziertes PA12;
- ETFE/ETFE-MSA;
- PVDF/haftungsmodifiziertes PVDF, z. B. entsprechend EP 0 673 762 A2;
- PEEK/mit blättchenförmigen Füllstoffen modifiziertes PEEK; bei der äußeren Schicht des Inliners kann so der thermische Ausdehnungskoeffizient verringert und an den des Metallrohrs angepasst werden, was die Scherspannungen zwischen polymerem Inliner und Metallrohr bei hohen Betriebstemperaturen oder großen Temperaturschwankungen reduziert. Geeignete blättchenförmige Füllstoffe sind beispielsweise Glimmer, Talkum, hexagonales Bornitrid, lamellarer Graphit, Molybdändisulfid und Schichtsilikate. Die Formmasse der äußeren Schicht enthält vorzugsweise 60 bis 96 Gew.-Teile PEEK und 4 bis 40 Gew.-Teile blättchenförmigen Füllstoff, wobei die Summe dieser Gewichtsteile 100 ergibt. In einer besonders bevorzugten Ausführungsform enthält die Formmasse der äußeren Schicht 60 bis 96 Gew.-Teile PEEK, 2 bis 25 Gew.-Teile hexagonales Bornitrid sowie 2 bis 25 Gew.-Teile Talkum, wobei die Summe dieser Gewichtsteile 100 beträgt.

Der Innendurchmesser des Trägerrohrs beträgt in der Regel bis zu 2000 mm, vorzugsweise bis zu 1000 mm und besonders bevorzugt bis zu 500 mm, wobei die Untergrenze des Innendurchmessers 20 mm, vorzugsweise 30 mm und besonders bevorzugt 40 mm beträgt. Die Wanddicke des Inliners liegt hierbei im Bereich von 1 bis 100 mm, vorzugsweise im Bereich von 1,5 bis 80 mm und besonders bevorzugt im Bereich von 2 bis 70 mm.

Der Inliner wird bevorzugt durch Extrusion einer thermoplastischen Formmasse zu endlosen Rohren hergestellt; diese werden dann in passende Abschnitte geschnitten. Mehrschichtige Inliner werden entsprechend bevorzugt durch Coextrusion hergestellt.

Das Einbringen des Inliners in das Trägerrohr erfolgt auf bekannte Weise, etwa gemäß dem eingangs skizzierten Stand der Technik.

Anschließend wird das Rohr von außen aufgeheizt, wobei jedes technisch geeignete Verfahren eingesetzt werden kann. Beispielsweise erhitzt man das Trägerrohr mittels Heißluft, Heißdampf, elektromagnetische Induktion oder IR-Strahler. Hierbei sollte die eingestellte Temperatur vorzugsweise mindestens 10 K, besonders bevorzugt mindestens 20 K, insbesondere bevorzugt mindestens 30 K und ganz besonders bevorzugt mindestens 40 K oberhalb der Schmelztemperatur des Materials der äußeren Oberfläche des Inliners liegen. Mit Schmelztemperatur ist der Kristallitschmelzpunkt Tₘ der Formmasse gemeint, bestimmt gemäß ISO 11357 beim 2. Aufheizen. Wenn der Inliner aus einer PA12-Formmasse besteht (Tₘ = 178 °C), sollte daher das Trägerrohr bevorzugt auf mindestens etwa 190 °C, besonders bevorzugt auf mindestens etwa 200 °C, insbesondere bevorzugt auf mindestens etwa 210 °C und ganz bevorzugt auf mindestens etwa 220 °C erhitzt werden. Analog dazu sollte dann, wenn der Inliner aus einer PEEK-Formmasse besteht (Tₘ = 335 °C), das Trägerrohr bevorzugt auf mindestens etwa 350 °C, besonders bevorzugt auf mindestens etwa 360 °C, insbesondere bevorzugt auf mindestens etwa 370 °C und ganz besonders bevorzugt auf mindestens etwa 380 °C erhitzt werden. Generell empfiehlt es sich, die Temperatur mindestens 10 s, bevorzugt mindestens 20 s, besonders bevorzugt mindestens 30 s und insbesondere bevorzugt mindestens 40 s zu halten.

Wird nun das Rohr auf eine Temperatur oberhalb des Erweichungs- bzw. des Schmelzbereichs des Materials der äußeren Oberfläche des Inliners erhitzt, so schmilzt die Außenoberfläche des Inliners und der Anpressdruck, der entweder durch die Rückverformung, die thermische Ausdehnung des Inliners oder einen von außen aufgebrachten Innendruck erzeugt wird, führt zu einem Einpressen der Schmelze in die Mikrohohlräume zwischen dem Inliner und dem Rohr. Damit wird der Ringraum eliminiert. Permeierendes Gas kann nicht mehr akkumulieren und somit kann bei Druckschwankungen des geförderten Mediums kein Kollabieren des Inliners mehr auftreten. Bei geeigneter Wahl haftender Werkstoffe kann die Kollabiersicherheit noch weiter gesteigert werden. So ist z. B. bekannt, dass PEEK sehr gut auf Metallen haftet. Auch durch die oben genannten Maßnahmen kann eine gute Haftung erzielt werden.

Anschließend wird die Temperatur reduziert. Dabei kann das Rohr beispielsweise auf natürliche Weise, bevorzugt durch eine Luftschleuse und besonders bevorzugt durch eine Wasserkühlung abgekühlt werden. Es muss mindestens so weit abgekühlt werden, dass sich die Außenoberfläche des Inliners wieder verfestigt. Üblicherweise wird auf Umgebungstemperatur abgekühlt.

Nach dem Abkühlen liegt eine bleibende Verkrallung zwischen dem Inlinermaterial und dem Rohrmaterial vor sowie zusätzlich gegebenenfalls eine Verklebung. Damit werden zusätzlich auch Relativbewegungen zwischen Inliner und Trägerrohr verhindert.

Aufgrund der hohen mechanischen Festigkeit, der guten Abriebeigenschaften, der guten Kratzfestigkeit sowie der optimalen Dicke des eingebrachten Inliners kann gleichzeitig sowohl ein guter Korrosionsschutz als auch ein guter Abrasionsschutz gewährleistet werden. Die sehr glatte Innenfläche des polymeren Inliners gewährleistet zudem einen sehr geringen Strömungswiderstand, was die benötigte Energie für den Förderprozess (insbesondere die Pumpenleistung) reduziert; gleichzeitig gewährleistet sie eine Reduzierung von Ablagerungen bzw. Verunreinigungen an der Innenwand, beispielsweise von Wachsen, Salzen oder Biobelägen. Gleichzeitig wird durch das erfindungsgemäße Verfahren die Gefahr beseitigt, dass der Inliner bei Druckschwankungen kollabiert. Aus diesem Grund kann die aus den Rohren hergestellte Rohrleitung besonders vorteilhaft zur Förderung bzw. zum Transport von Rohöl oder Erdgas oder zum Transport von überkritischem CO₂ eingesetzt werden, vor allem unter Bedingungen, bei denen mit relativ schnellen Druckänderungen gerechnet werden muss.

## Patentansprüche

1. Verfahren zur Herstellung eines Rohres, dessen innere Oberfläche mit einer thermoplastischen Schicht ausgekleidet ist, wobei das Verfahren folgende Schritte enthält:
a) Ein Rohr wird bereitgestellt,
b) ein Inliner aus einem thermoplastischen Werkstoff wird bereitgestellt,
c) gegebenenfalls wird der Querschnitt des Inliners durch Einwirken einer äußeren Kraft verringert,
d) der Inliner wird in das Rohr eingebracht,
e) das Rohr wird auf eine Temperatur aufgeheizt, die höher als der Kristallitschmelzpunkt Tₘ der Formmasse der äußeren Oberfläche des Inliners ist, während oder nachdem der eingebrachte Inliner radial gedehnt wird, so dass seine äußere Oberfläche die Innenkontur des Rohrs annimmt,
f) der Inliner wird abgekühlt,
**dadurch gekennzeichnet, dass** das Rohr im Schritt e) von außen aufgeheizt wird.

2. Verfahren gemäß Anspruch 1,
**dadurch gekennzeichnet,**
**dass** der Außendurchmesser des Inliners maximal 25 % größer ist als der Innendurchmesser des Rohrs und dass im Verfahrensschritt c) der Querschnitt des Inliners um 3 bis 30 % reduziert wird.

3. Verfahren gemäß Anspruch 1,
**dadurch gekennzeichnet,**
**dass** der Außendurchmesser des Inliners dem Innendurchmesser des Rohrs entspricht oder maximal um 3 % kleiner ist.

4. Verfahren nach einem der vorhergehenden Ansprüche,
**dadurch gekennzeichnet,**
**dass** der Inliner einschichtig ist oder aus zwei, drei oder mehr Schichten besteht.

5. Verfahren gemäß Anspruch 4,
**dadurch gekennzeichnet,**
**dass** der Inliner aus zwei, drei oder mehr Schichten besteht und die äußere Schicht des Inliners haftungsmodifiziert ist.

## Claims

1. Process for the production of a pipe, the interior surface of which has been lined with a thermoplastic layer, where the process comprises the following steps:
a) a pipe is provided,
b) an inliner made of a thermoplastic material is provided,
c) the cross section of the inliner is optionally reduced through exposure to an exterior force,
d) the inliner is introduced into the pipe,
e) the pipe is heated to a temperature which is higher than the crystallite melting point Tₘ of the moulding composition of the exterior surface of the inliner, while or after the inliner introduced is expanded radially, so that its exterior surface assumes the internal shape of the pipe,
f) the inliner is cooled,
**characterized in that** the pipe in step e) is heated from outside.

2. Process according to Claim 1,
**characterized in that**
the external diameter of the inliner is at most 25% greater than the internal diameter of the pipe and that in step c) the cross section of the inliner is reduced by from 3 to 30%.

3. Process according to Claim 1,
**characterized in that**
the external diameter of the inliner corresponds to the internal diameter of the pipe or is smaller by at most 3%.

4. Process according to any of the preceding claims,
**characterized in that**
the inliner has one layer or is composed of two, three or more layers.

5. Process according to Claim 4,
**characterized in that**
the inliner is composed of two, three or more layers and the exterior layer of the inliner has been adhesion-modified.

## Revendications

1. Procédé de fabrication d'un tube, dont la surface intérieure est habillée avec une couche thermoplastique, le procédé contenant les étapes suivantes :
a) un tube est préparé,
b) un habillage intérieur en un matériau thermoplastique est préparé,
c) la section transversale de l'habillage intérieur est éventuellement réduite par l'action d'une force extérieure,
d) l'habillage intérieur est introduit dans le tube,
e) le tube est porté à une température qui est supérieur au point de fusion des cristallites Tₘ du matériau de moulage de la surface extérieure de l'habillage intérieur, pendant ou après que l'habillage intérieur introduit ait été étiré radialement, de telle sorte que sa surface extérieure adopte le contour intérieur du tube,
f) l'habillage intérieur est refroidi,
**caractérisé en ce que** le tube est chauffé depuis l'extérieur à l'étape e).

2. Procédé selon la revendication 1, **caractérisé en ce que** le diamètre extérieur de l'habillage intérieur est au plus 25 % plus grand que le diamètre intérieur du tube, et **en ce qu'**à l'étape de procédé c), la section transversale de l'habillage intérieur est réduite de 3 à 30 %.

3. Procédé selon la revendication 1, **caractérisé en ce que** le diamètre extérieur de l'habillage intérieur correspond au diamètre intérieur du tube ou est au plus 3 % plus petit.

4. Procédé selon l'une quelconque des revendications précédentes, **caractérisé en ce que** l'habillage intérieur est monocouche ou est constitué par deux, trois ou davantage de couches.

5. Procédé selon la revendication 4, **caractérisé en ce que** l'habillage intérieur est constitué par deux, trois ou davantage de couches et la couche extérieure de l'habillage intérieur est modifiée par adhésion.
